# EUROPEAN PATENT SPECIFICATION

(11) **EP 4 236 197 B1**
(45) Date of publication and mention of the grant of the patent: **06.08.2025**
(21) Application number: 23171107.8
(22) Date of filing: 17.02.2020
(51) Int. Cl.: G06Q 40/03, H04L 9/32, G06N 3/006, G06N 3/126, G06N 20/00, G06N 7/01

(54) **MICRO-LOAN SYSTEM**
MIKROKREDITSYSTEM
SYSTÈME DE MICROPRÊT

(30) Priority: 19.02.2019 US 201916279582
(43) Date of publication of application: 30.08.2023
(62) Divisional of application: 20759852.5
(73) Proprietor: ADP, Inc., Roseland, NJ 07068 (US)
(72) Inventor: SILVEIRA, Roberto, Roseland (US); PEREIRA, Fabiano, Roseland (US); SILVA, Leandro, Roseland (US); FRANTZ, Matheus, Roseland (US); CARVALHO, Daniel, Roseland (US); HARTMANN, Julio, Roseland (US); MOURA, Bruno, Roseland (US); CASTRO, Iury, Roseland (US); BOSCAINI, Lucas, Roseland (US); PRIMAZ, Ezequiel, Roseland (US)
(74) Representative: Kilburn & Strode LLP

(56) References cited:
- WO-A1-2017/145021
- WO-A1-2018/009973
- US-A1- 2018 075 527
- US-A1- 2018 322 588

## Description

### BACKGROUND INFORMATION

### 1. Field:

The present disclosure relates to use of smart contracts implemented solely in a computer network for use with distributed ledgers.

### 2. Background:

A distributed ledger, as used throughout this document, refers to a computer-only technology that enables a distributed recordation of transactions through the distributed ledger maintained by a network of computers. A blockchain is an example of a distributed ledger. BITCOIN(o:) is an example of a blockchain technology application.

A blockchain is a type of distributed ledger, which includes digitally-recorded, unmodifiable data in packages called blocks. A distributed ledger is a consensus of replicated, shared, and synchronized digital data geographically spread across multiple computers which may be in different sites, countries, and/or institutions maintained by many different parties. A distributed ledger can be public, such as BITCOIN^{®}, where there is no limitation on who may participate in the network, or private, where only approved parties are permitted to participate in the network.

WO 2018/009973 A1 describes an automated lending and investment system that uses a matching engine to connect lenders and borrowers based on their risk profiles. US 2018/075527 A1 describes a blockchain-based platform for evaluating individuals' creditworthiness.

### SUMMARY

The illustrative embodiments provide for a method, system, and computer program product for facilitating peer-to-peer micro-loan transactions. A computer system determines an integrity score for each user of a plurality of users. The integrity score for each user is based on human capital management information for the user and peer-submitted feedback about the user. The computer system receives a loan transaction request from a borrower-user. The computer system determines a risk score for the loan transaction based at least on the borrower-user's integrity score and user information on capital management systems. The computer system identifies a set of lender-users based on the determined risk score and the lender-users' integrity scores. The computer system facilitates a negotiation of transaction terms between the borrower-user and the set of lender-users to determine the transaction terms. Responsive to finalization of the transaction terms, the computer system records the loan transaction and the transaction terms in a distributed ledger, and remitting loan funds to the borrower-user. Responsive to a subsequent repayment of the loan transaction according to the transaction terms, the computer system solicits peer-submitted feedback from at least one of the borrower-user and the set of lender-users. The computer system updates the integrity score for the borrower-user and the set of lender-users based on received peer-submitted feedback regarding the loan transaction.

The illustrative embodiments also contemplate a computer configured to execute program code which implements this method. The illustrative embodiments also contemplate a non-transitory computer-recordable storage medium storing program code, which, when executed, implements this method.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of the illustrative embodiments of the present disclosure when read in conjunction with the accompanying drawings, wherein:
**Figure 1** is an illustration of a data processing environment depicted in accordance with an illustrative embodiment;
**Figure 2** is a block diagram of a micro-loan environment depicted in accordance with an illustrative embodiment;
**Figure 3** is a block diagram of a predictive modeling/indexing depicted in accordance with an illustrative embodiment;
**Figure 4** is an example table for use with a dataset in machine learning depicted in accordance with an illustrative embodiment
**Figure 5** is an illustration of a distributed ledger in the form of a blockchain in accordance with an illustrative embodiment;
**Figure 6** is an illustration of a first step in creating a blockchain in accordance with an illustrative embodiment;
**Figure 7** is an illustration of a second step in creating a blockchain in accordance with an illustrative embodiment;
**Figure 8** is an illustration of a third step in creating a blockchain in accordance with an illustrative embodiment;
**Figure 9** is an illustration of a fourth step in creating a blockchain in accordance with an illustrative embodiment;
**Figure 10** is an illustration of a fifth step in creating a blockchain in accordance with an illustrative embodiment;
**Figure 11** is an illustration of a sixth step in creating a blockchain in accordance with an illustrative embodiment;
**Figure 12** is an illustration of a creation of a smart contract in accordance with an illustrative embodiment;
**Figure 13** is an illustration of an operation of a smart contract in accordance with an illustrative embodiment;
**Figure 14** is a block diagram of an execution environment for executing a smart contract stored on a blockchain in accordance with an illustrative embodiment;
**Figure 15** is a block diagram of a blockchain environment in accordance with an illustrative embodiment;
**Figure 16** is an illustration of a flowchart of a process for predictive modeling and indexing depicted in accordance with an illustrative embodiment;
**Figure 17** is a flowchart of a process for facilitating peer-to-peer micro-loan transactions depicted in accordance with an illustrative embodiment; and
**Figure 18** is a block diagram of a data processing system in accordance with an illustrative embodiment.

### DETAILED DESCRIPTION

The illustrative embodiments recognize and take into account one or more different considerations. For example, the illustrative embodiments recognize and take into account that workers around the globe receive their pay from payroll companies, but they rely on external banks if they need to ask for personal loans in an emergency situation. In almost all situations, external banks need to run detailed risk assessments in order to check if the requester will be able to fulfill repayment of the loan at the end of the contract terms. Another option people tend to use to request loans in smaller quantities is to ask consigned credit companies, which have sometimes cumbersome processes and don't always make clear to their customers all the fees involved in the loan process.

Currently, several startups in the financial technology sector (so-called Fintechs) are making use of data and mobile applications to provide quick, easy-to-use, 24/7 solutions to customers, with very competitive interest rates, closing some gaps that were not being fulfilled by traditional financial institutions. The expected growth rate for Fintech applications is around 20%, with mobile money services that could evolve into a US$3 trillion payments volume opportunity. AccordJ.ng to the same research, the 7 key technology enablers for Fintech applications use data analytics, mobile and artificial intelligence.

Currently, loaning of small amounts can be done solely between the financial institution and an individual. Currently, all the loan systems process for small quantities (e.g. microcredit) are cumbersome and don't have clearly stated conditions of the transaction. Usually, the interest rates for people seeking credit are not very enticing, and are not negotiable.

Furthermore, the illustrative embodiments recognize and take into account that payroll companies, as a provider of human capital management services, have lots of employee data and payroll information. Payroll companies, as a provider of human capital management services, are uniquely situated to access risks and understand financial behavior of an organization's employees. This valuable information can be used to quickly assess risks of a loaning process.

The methods and systems of the illustrative embodiments use data analytics based on payroll and HCM systems, in order to connect two profiles of workers: (1) workers in emergent need of micro-loans and (2) workers with extra resources willing to loan money at a very enticing rate with very low risk. As the customer base inside payroll and HCM systems is large and potentially spread in several countries; the method could find both people needing micro-loans and also people interested in providing loans at very enticing rates. Also, payroll companies can use the payroll transactions between borrowers and lenders as well to significantly reduce risk in the transaction.

Currently, there is no platform available for people seeking to complete transactions for the welfare of other individuals who have low risk, and in which their profile will be recognized in doing so in future transactions. The methods and systems of the illustrative embodiments simplifies the micro-loaning process and reduces risks, facilitating the process and making everything transparent, with the trust in the transaction being reinforced by the distributed network, and in distributed databases such as blockchain, as well as the payroll reinforcement from the borrowers side. In this case, a lender can be sure that if payment is not fulfilled, it will be directly subtracted from the borrower's payroll in subsequent months. Currently, there is no method or application in which the risk of a loan is enforced in a trust network between individuals.

The flowcharts and block diagrams in the different depicted embodiments illustrate the architecture, functionality, and operation of some possible implementations of apparatuses and methods in an illustrative embodiment as it relates to the disclosed application. In this regard, each block in the flowcharts or block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added, in addition to the illustrated blocks, in a flowchart or block diagram.

As used herein, the phrase "at least one of, " when used with a list of items, means different combinations of one or more of the listed items may be used and only one of each item in the list may be needed. In other words, "at least one of" means any combination of items and number of items may be used from the list, but not all of the items in the list are required. The item may be a particular object, thing, or a category.

For example, and without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, and without limitation, two of item A, one of item B, and ten of item C; four of item B and seven of item C; or other suitable combinations.

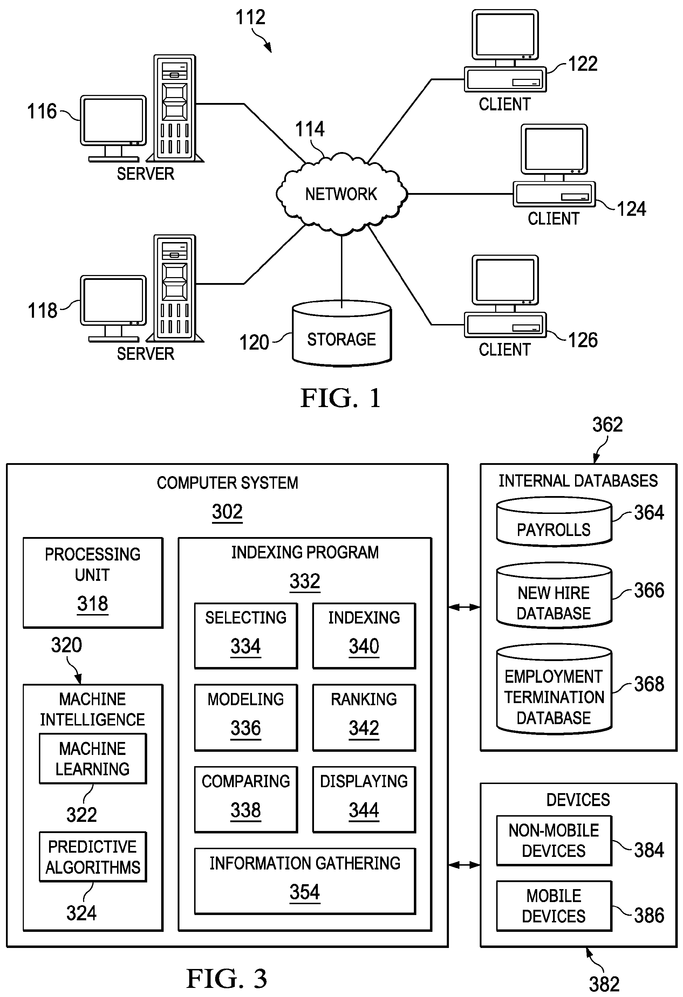

With reference now to the figures and, in particular, with reference to **Figure 1****,** an illustration of a diagram of a data processing environment is depicted in accordance with an illustrative embodiment. It should be noted that **Figure 1** is only provided as an illustration of one implementation and is not intended to imply any limitation with regard to the environments in which the different embodiments may be implemented. Many modifications to the depicted environments may be made.

**Figure 1** depicts a pictorial representation of a network of data processing systems in which illustrative embodiments may be implemented. Network data processing system **112** is a network of computers in which the illustrative embodiments may be implemented. Network data processing system **112** contains network **114,** which is a medium used to provide communications links between various devices and computers connected together within network data processing system **112.** Network **114** may include connections, such as wire, wireless communication links, or fiber optic cables.

In the depicted example, server computer **116** and server computer **118** connect to network **114** along with storage unit **120.** In addition, client computers including client computer **122,** client computer **124,** and client computer **126** connect to network **114.** These connections can be wireless or wired connections depending on the implementation. Client computer **122,** client computer **124,** and client computer **126** may be, for example, personal computers or network computers. In the depicted example, server computer **116** provides information, such as boot files, operating system images, and applications to client computer **122,** client computer **124,** and client computer **126.** Client computer **122,** client computer **124,** and client computer **126** are clients to server computer **116** in this example. Network data processing system **112** may include additional server computers, client computers, and other devices not shown.

Program code located in network data processing system **112** may be stored on a computer-recordable storage medium and downloaded to a data processing system or other device for use. For example, the program code may be stored on a computer-recordable storage medium on server computer **116** and downloaded to client computer **122** over network **114** for use on client computer **122.**

In the depicted example, network data processing system **112** is the Internet with network **114** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **112** also may be implemented as a number of different types of networks, such as, for example, an intranet, a local area network (LAN), or a wide area network (WAN).

**Figure 1** is intended as an example, and not as an architectural limitation for the different illustrative embodiments. The illustration of network data processing system **112** is also not meant to limit the manner in which other illustrative embodiments can be implemented. For example, other client computers may be used in addition to or in place of client computer **122,** client computer **124,** and client computer **126** as depicted in **Figure 1****.** Moreover, client computer **122,** client computer **124,** and client computer **126** may include a tablet computer, a laptop computer, a bus with a vehicle computer, and other suitable types of clients.

In the illustrative examples, the hardware used may take the form of a circuit system, an integrated circuit, an applicationspecific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, programmable array logic, a field programmable logic array, a field programmable gate array, and other suitable hardware devices. Additionally, the processes may be implemented in organic components integrated with inorganic components and may be comprised entirely of organic components, excluding a human being. For example, the processes may be implemented as circuits in organic semiconductors.

The computer-readable program instructions may also be loaded onto a computer, a programmable data processing apparatus, or other device to cause a series of operational steps to be performed on the computer, a programmable apparatus, or other device to produce a computer implemented process, such that the instructions which execute on the computer, the programmable apparatus, or the other device implement the functions and/or acts specified in the flowchart and/or block diagram block or blocks.

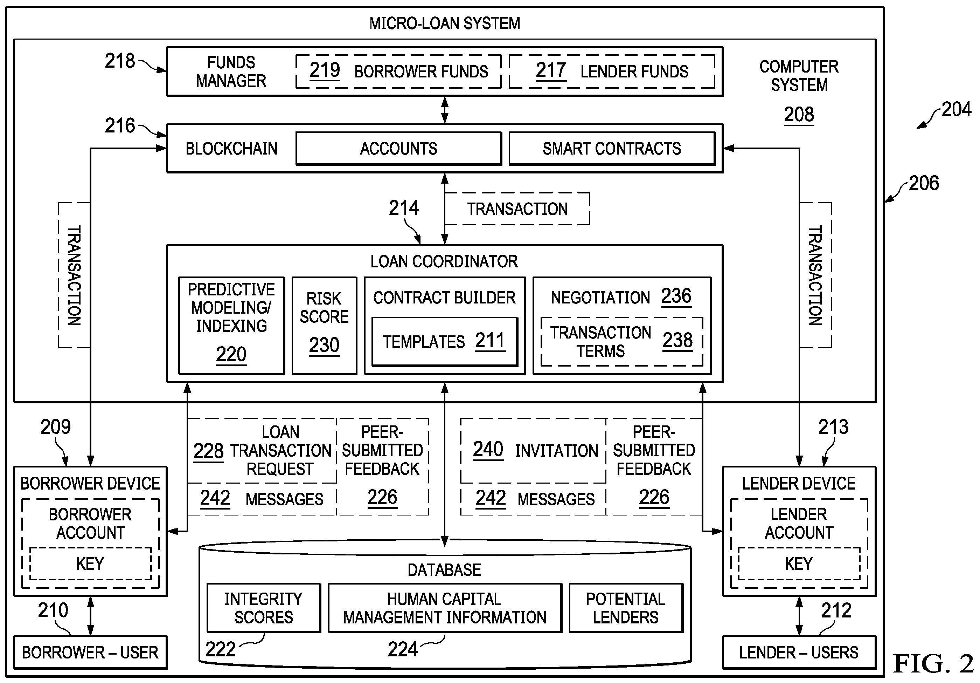

With reference now to **Figure 2****,** a block diagram of a micro-loan environment is depicted in accordance with an illustrative embodiment. As depicted, micro-loan environment **204** includes micro-loan system **206.**

In this illustrative example, micro-loan system **206** manages micro-loan transactions between users associated with one or more organizations. The organizations may be, for example, a corporation, a partnership, a charitable organization, a city, a government agency, or some other suitable type of organization. Organizations can encompass people who are employed by or associated with the organization. Users of micro-loan system **206** can be an employee of one or more organizations of the organizations.

In this illustrative example, micro-loan system **206** is implemented in computer system **208.** Computer system **208** is an example of network data processing system **112** of **Figure 1****.**

Micro-loan system **206** may be implemented in software, hardware, firmware, or a combination thereof. When software is used, the operations performed by micro-loan system **206** may be implemented in program code configured to run on hardware, such as a processor unit. When firmware is used, the operations performed by micro-loan system **206** may be implemented in program code and data and stored in persistent memory to run on a processor unit. When hardware is employed, the hardware may include circuits that operate to perform the operations in micro-loan system **206.**

In this illustrative example, micro-loan system **206** facilitates peer-to-peer micro-loan transactions between borrower-user **210** and lender-users **212.** The distributed computing, and trust enabled, by micro-loan system **206** allows users greater control over the negotiation of transaction termsloan, as well as provides transparency and insight into the lending process.

Micro-loan system **206** includes one or more different components. As depicted, micro-loan system **206** includes loan coordinator **214,** blockchain **216,** and funds manager **218.** Using predictive modeling/indexing **220,** loan coordinator **214** determines integrity scores **222** for each user of a plurality of users. Integrity scores **222** for each user is based on human capital management information **224** for the user and peer-submitted feedback **226** about the user.

In response to receiving a loan transaction request **228** from borrower-user **210,** loan coordinator **214** determines a risk score **230** for the loan transaction. Loan coordinator **214** determines a risk score **230** based at least on integrity scores **222** of borrower-user **210,** as well as in the information available in the capital management system.

Loan coordinator **214** identifies a set of lender-users **212** based on the determined ones of risk score **230** and integrity scores **222** of potential ones of lender-users **212.** In response to identifying the set of lender-users **212,** loan coordinator **214** sends invitation **240** to the set of lender-users **212**

Loan coordinator **214** facilitates a negotiation **236** between borrower-user **210** and the set of lender-users **212** to determine transaction terms **238.** In one illustrative example, loan coordinator **214** functions as an intermediary, passing messages **242** between borrower device **209** of borrower-user **210** and lender device **213** of the set of lender-users **212.** Lender-users **212** can enter initial values for transaction terms **238** using one or more of templates **211.** One or more values for values for transaction terms **238** can be altered during the course of negotiation **236.**

Responsive to finalization of the transaction terms, loan coordinator **214** records the loan transaction and the transaction terms in blockchain **216.** Blockchain **216** is a type of distributed ledger, which includes digitally recorded, unmodifiable data in packages called blocks. A distributed ledger, as used throughout this document, refers to a computer-only technology that enables the distributed recordation of transactions through a distributed ledger maintained by a network of computers. A distributed ledger is a consensus of replicated, shared, and synchronized digital data geographically spread across multiple computers which may be in different sites, countries, and/or institutions maintained by many different parties. A blockchain is an example of a distributed ledger.

Stated more formally, blockchain **216** is a distributed database that maintains a continuously growing list of ordered records called blocks. Each block contains a timestamp and a link to a previous block, with the hash of the prior block linking the two. By design, blockchains are inherently resistant to modification of the data because, once recorded, the data in a block cannot be altered retroactively. Through the use of a peer-to-peer network, and one or more distributed timestamping servers, a blockchain database may be managed autonomously. Thus, blockchains may be used to provide an open, distributed ledger that can record transactions between parties efficiently and in a verifiable and permanent way.

Responding to finalization of the transaction terms, loan coordinator **214** remits lender funds **217** to the borrower-user **210.** Loan coordinator **214** can remit lender funds **217** by interacting with funds manager **218** as described below.

In this manner, loan coordinator **214** can use payroll transactions as a way to further reduce risks associated with providing loans. For example, lender-users **212** can be assured of receiving repayment, by discounting borrower funds **219** from the paycheck of borrower-user **210,** as agreed to and digitally signed by both parties, and as recorded in blockchain **216.** Responding to a subsequent repayment of borrower funds **219** for the loan transaction according to the transaction terms, loan coordinator **214** solicits peer-submitted feedback **226** from at least one of borrower-user **210** and the set of lender-users **212.**

Loan coordinator **214** updates the integrity score for borrower-user **210** and the set of lender-users **212** based on received peer-submitted feedback **226** regarding the loan transaction.

Turning to **Figure 3****,** a block diagram of a predictive modeling/indexing is depicted in accordance with an illustrative embodiment. Computer system **302** is connected to internal databases **362,** and devices **382.** Internal databases **362** comprise payrolls **364,** new hire database **366,** and employment termination database **368.** Devices **382** are comprised of non-mobile devices **384** and mobile devices **386.**

Computer system **302** comprises processing unit **318,** machine intelligence **320,** and indexing program **332.** Machine intelligence **320** comprises machine learning **322** and predictive algorithms **324.** Machine learning **322** is a branch of artificial intelligence (AI) that enables computers to detect patterns and improve performance without direct programming commands. Rather than relying on direct input-commands to complete a task, machine learning **322** relies on input-data. The data is fed into the machine, one of predictive algorithms **324** is selected, parameters for the data are configured, and the machine is instructed to find patterns in the input data through optimization algorithms. The data model formed from analyzing the data is then used to predict future values.

Machine intelligence **320** can be implemented using one or more systems such as an artificial intelligence system, a neural network, a Bayesian network, an expert system, a fuzzy logic system, a genetic algorithm, or other suitable types of systems. Machine learning **322** and predictive algorithms **324** may make computer system **302** a special purpose computer for dynamic predictive modelling of the ability of local area economies to hire additional workers.

In an embodiment, processing unit **318** comprises one or more conventional general-purpose central processing units (CPUs). In an alternate embodiment, processing unit **318** comprises one or more graphical processing units (GPUs). Though originally designed to accelerate the creation of images with millions of pixels whose frames need to be continually recalculated to display output in less than a second, CPUs are particularly well suited to machine learning. Their specialized parallel processing architecture allows them to perform many more floating-point operations per second than a CPU, on the order of 1100x more. GPUs can be clustered together to run neural networks comprising hundreds of millions of connection nodes.

Indexing program **332** comprises information gathering **354,** selecting **334,** modeling **336,** comparing **338,** indexing **340,** ranking **342,** and displaying **344.** Information gathering **354** is configured to gather data from internal databases **362.**

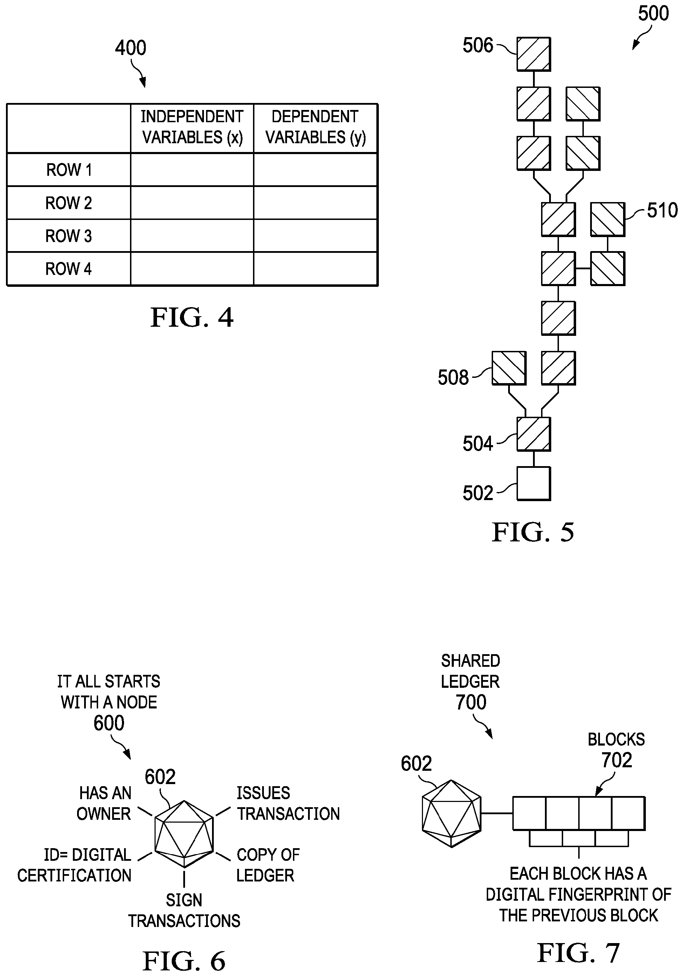

Referring to **Figure 4****,** an example table for use with a dataset in machine learning is depicted in accordance with an illustrative embodiment. The dataset used to form predictions is defined and labeled in a table such as table **400.** Each column is known as a vector, and the data within each column is a feature, also known. as a variable, dimension, or attribute. Each row represents a single observation of a given feature and is referred to as a case or value. The y values represent the output and are typically expressed in the final column as shown. For ease of illustration the example shown in **Figure 4** is a simple 2-D table, but it should be noted that multiples vectors (forming matrices) are typically used to represent large datasets. Each category of data calculated in the process flow could be represented by a separate vector (column) in a tabular dataset depending on how the data is aggregated.

**Figure 5** is an illustration of a distributed ledger in the form of a blockchain depicted in accordance with an illustrative embodiment. Blockchain **500** is a blockchain, which is a specific implementation of a distributed ledger. Blockchain **500** is described to introduce blockchain concepts.

Blockchain **500** starts with root block **502.** Blocks indicated with a right-leaning hash, such as block **504** or block **506,** are part of the main chain. Blocks with a left-leaning hash, such as block **508** or block **510,** exist outside of blockchain **500**.

Thus, blockchain **500** is a heaviest path from root block **502** to block **506** through the entire block tree. The "heaviest" path through the block tree, i.e. the path that has had the most computation done upon it, is conceptually identified as blockchain **500.** Identifying blockchain **500** in this manner allows a decentralized consensus to be achieved for the state of blockchain **500.**

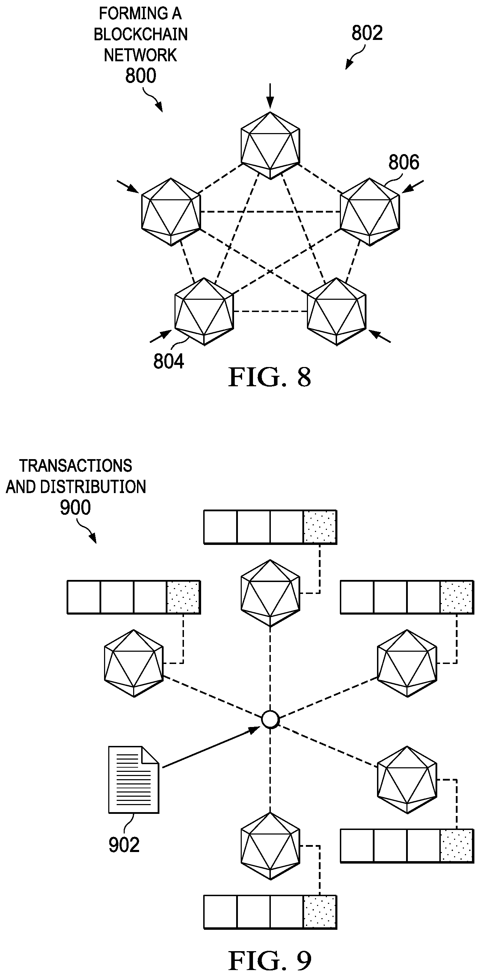

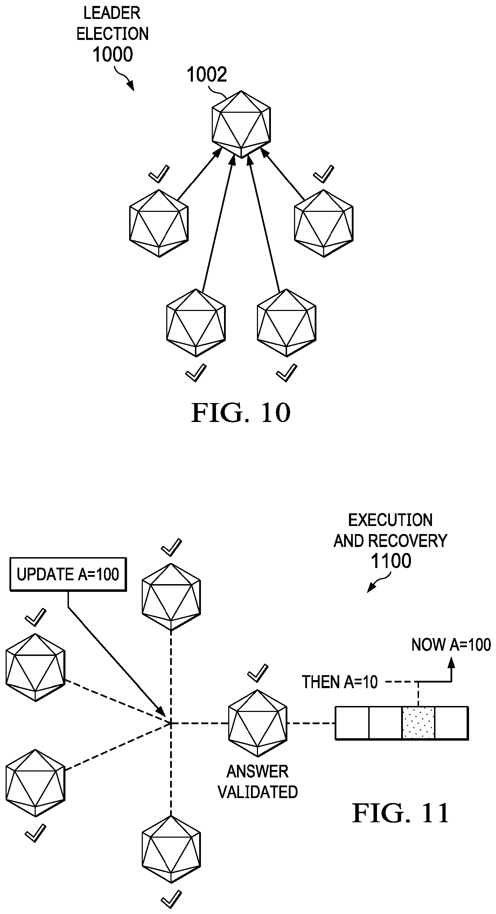

**Figure 6** through **Figure 11** should be considered together. **Figure 6** is an illustration of a first step in creating a blockchain in accordance with an illustrative embodiment. **Figure 7** is an illustration of a second step in creating a blockchain in accordance with an illustrative embodiment. **Figure 8** is an illustration of a third step in creating a blockchain in accordance with an illustrative embodiment. **Figure 9** is an illustration of a fourth step in creating a blockchain in accordance with an illustrative embodiment. **Figure 10** is an illustration of a fifth step in creating a blockchain in accordance with an illustrative embodiment. **Figure 11** is an illustration of a sixth step in creating a blockchain in accordance with an illustrative embodiment. **Figure 6** through **Figure 11** may be implemented on a computer or on multiple computers in a network environment. **Figure 6** through **Figure 11** address a technical problem that only exists in computer programming and execution. As used throughout **Figure 6** through **Figure 11****,** common reference numerals refer to common objects in these figures.

In operation **600** shown in **Figure 6****,** account **602,** also sometimes referred to as a "node," is a state object recorded in a shared ledger that represents the identity of agents that can interact with the ledger. Account **602** includes an owner, a digital certificate identification, and a copy of a ledger. Account **602** may sign transactions and inspect the blockchain and its associated state. A user may issue transactions, signed by account **602,** to interact with the blockchain. The combined state of all accounts that have interacted with the blockchain is the state of the blockchain.

In operation **700** shown in **Figure 7****,** account **602** collates transactions and distributions into blocks **702,** and adds blocks **702** to the shared ledger. Blocks **702** function as a journal, recording a series of transactions together with the previous block and an identifier for the final state of the blockchain. Blocks **702** are chained together using a cryptographic hash as a means of reference - each block in the shared ledger has a digital fingerprint of the previous block. In this manner, it is not possible to alter previous blocks without being detected.

In operation **800** shown in **Figure 8****,** blockchain network **802** is formed. Blockchain network **802** may include multiple local copies of blockchains such as those shown in **Figure** 6 or **Figure 7****.** Each account, such as account **804** or account **806,** has its own blockchain.

In operation **900** shown in **Figure 9****,** transaction **902** is issued from an account, such as account **804** or account **806** in **Figure 8****.** Transaction **902** is an instruction constructed and cryptographically-signed by an account, such as such as account **804** or account **806** in **Figure 8****.**

Transaction **902** can result in message calls to other accounts. Transactions that result in message calls contain data specifying input data for the message. Alternatively, transaction **902** can result in the creation of new agent accounts, i.e., "contract creation" transactions.

Transactions are collated into blocks that are added to local blockchain copies by the various accounts. The blockchain is synchronized across the various nodes. Thus, each account in blockchain network **802** in **Figure 8** adds identical blocks to a local copy of the blockchain.

In operation **1000** shown in **Figure 10****,** leader election takes place. Leader account **1002** takes priority for deciding which information is the most accurate or up-to-date. Identifying information by leader account **1002,** and validating this information by other accounts, allows a decentralized consensus to be achieved throughout the blockchain network **802** for the state of blockchain **500.**

In operation **1100** shown in **Figure 11****,** data execution and recovery takes place. A query regarding data stored in one or more of the nodes may return a validated answer regarding contents in the blocks.

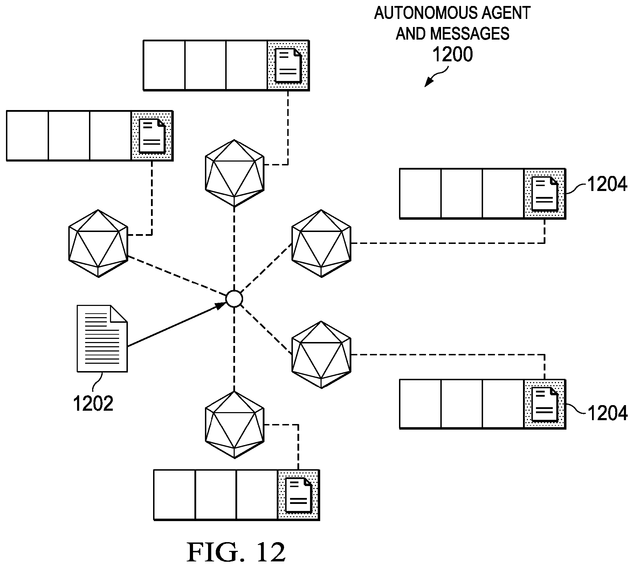

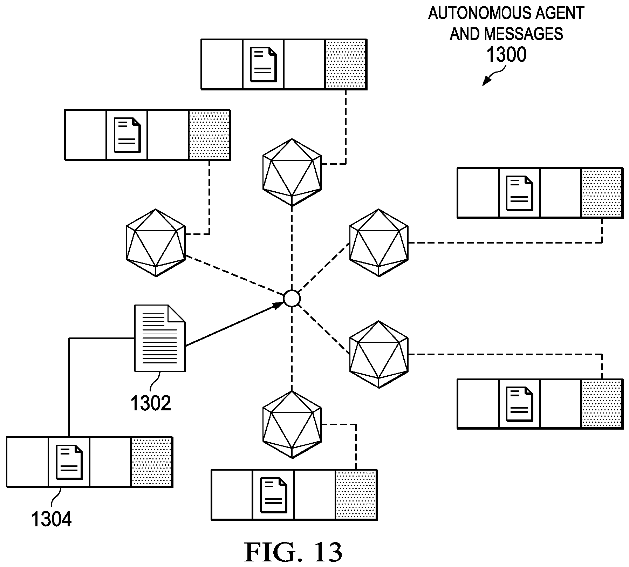

**Figure 12** and **Figure 13** should be considered together. **Figure 12** is an illustration of a step in creating a smart contract within a blockchain in accordance with an illustrative embodiment. **Figure 13** is an illustration of a step in creating a blockchain using a smart contract within a blockchain in accordance with an illustrative embodiment. **Figure 12** and **Figure 13** may be implemented on a computer or on multiple computers in a network environment.

In operation **1200** shown in **Figure 12****,** transaction **1202** is a "contract creation" transaction that results in the creation of smart contract **1204.** In contrast to data contained in message call transactions, such as transaction **1202** in **Figure 12****,** transaction **1202** contains data specifying initialization code for smart contract **1204.**

Smart contract **1204** is a type of account existent only within the blockchain execution environment. Smart contract **1204** is not associated with an external account, but rather is a notional object stored that resides at a specific address on the blockchain. Smart contract **1204** includes both code, i.e. *functions,* and data, i.e. *state.* Smart contract **1204** has direct control over its own state and storage memory to preserve persistent state variables. When referenced, either through a transaction or due to the internal execution of code, smart contract **1204** executes its associated functions.

Smart contracts have a number of desirable properties. Execution of the smart contract is managed automatically by the network. Documents are encrypted on a shared ledger that is duplicated many times over on different nodes of the network, ensuring that the data is true and correct. Because smart contracts on distributed ledgers cannot be modified, they provide an immutable record of submitted workflow transactions that is highly resistant to post-transaction changes.

Transaction **1202** contains data specifying initialization code for smart contract **1204.** Each account in a blockchain network executes this initialization code to incorporate smart contract **1204** into the blockchain. At creation, smart contract **1204,** initialization code is executed to retrieve the associated functions of smart contract **1204,** after which the initialization code can be discarded.

In operation **1300** shown in **Figure 13****,** smart contract **1204** generates message **1302.** Message **1302** is an instruction constructed by smart contract **1304** in response to receiving a message. Because smart contract **1304** exists only within the blockchain execution environment, message **1302** is a sort of "virtual transaction" sent by code from one account to another.

Message **1302** can specify input data that results in message calls for other accounts, allowing smart contract **1304** to read and write to internal storage. Alternatively, message **1302** can contain data specifying initialization code, allowing smart contract **1304** to create additional smart contracts.

The associated functions of smart contract **1304** can be executed as part of state transition and block validation. If a transaction is added into a block, the code execution spawned by that transaction will be executed by all accounts that download and validate the block.

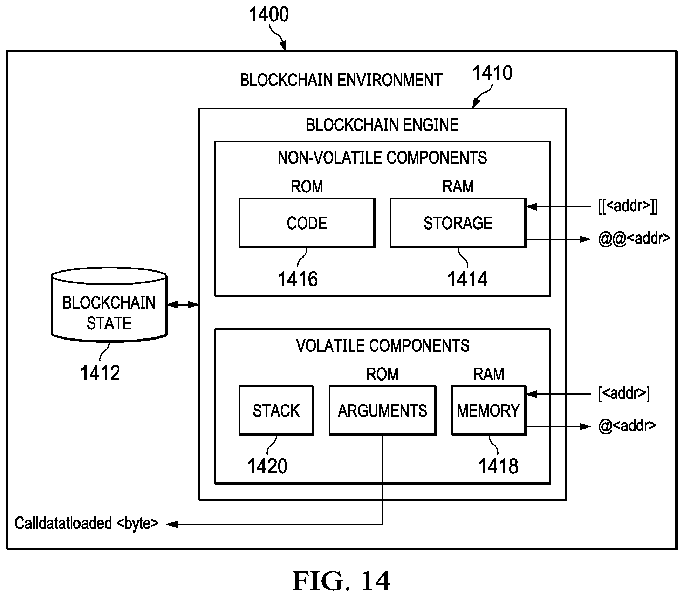

With reference next to **Figure 14****,** a block diagram of an execution environment for executing a smart contract stored on the blockchain is depicted in accordance with an illustrative embodiment.

Blockchain environment **1400** includes a number of different components. As depicted, blockchain environment **1400** includes blockchain engine **1410** and blockchain state **1412.**

Blockchain engine **1410** is responsible for internal-account state and transaction-computation for the blockchain. Blockchain engine **1410** performs state-transitions for smart contracts. In this illustrative example, blockchain engine **1410** is a stackbased architecture that uses a last-in, first-out stack. Blockchain engine **1410** executes transactions recursively, computing the system state and the machine state for each loop. Blockchain engine **1410** includes non-volatile and volatile components.

Storage **1414** is non-volatile and is maintained on the blockchain as part of the system state. Every smart contract on the blockchain has its own storage. Storage **1414** preserves all the state variables for the smart contract that do not change between the function calls.

Code **1416** are the functions associated with smart contract **1204** and **1304** from **Figure 12** and **Figure 13****,** respectively. Code **1416** are instructions that formally specify the meaning and ramifications of a transaction or message; code **1416** executes in response to receiving a message call. Code **1416** is stored in a virtual ROM that cannot be changed after construction. Blockchain engine **1410** executes code **1416** in response to a message call to the smart contract.

Memory **1418** is volatile and is cleared between external function calls. Memory **1418** stores temporary data, such as, function arguments, local variables, and return values. Stack **1420** is used to hold temporary values when conducting calculations in blockchain engine **1410.**

Blockchain state **1412** is combined state of all accounts that have interacted with the blockchain, mapping blockchain addresses to accounts and account states. Blockchain state **1412** may not be stored on the blockchain, but rather in a data structure on a backend state database that maintains the mapping. Blockchain engine **1410** relies on blockchain state **1412** for execution of certain instructions.

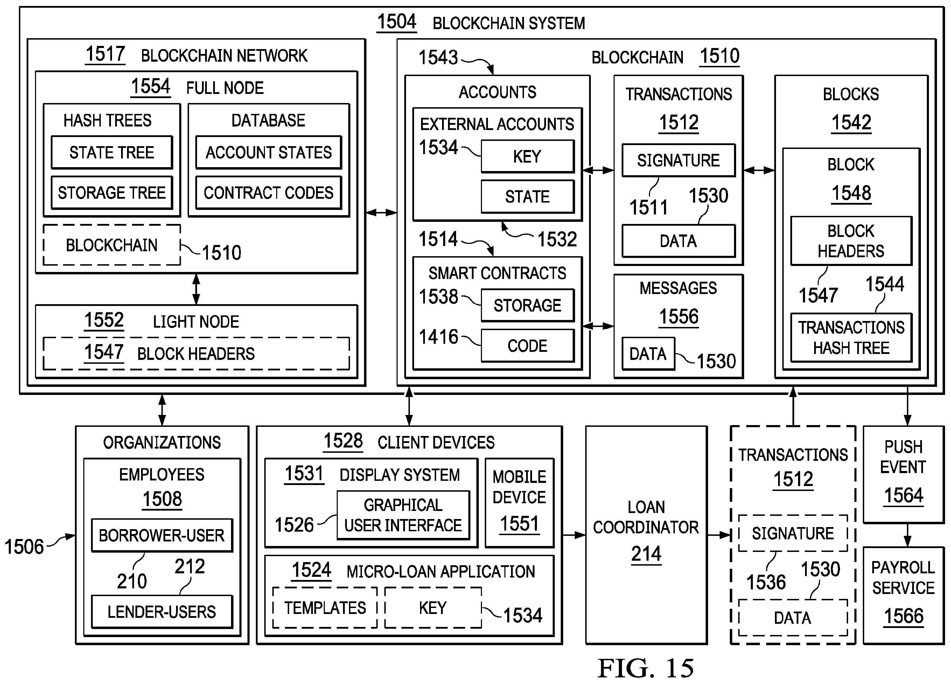

With reference now to **Figure 15****,** a block diagram of a blockchain in a micro-loan environment is depicted in accordance with an illustrative embodiment. As depicted, blockchain **1510** of blockchain system **1504** can be blockchain **216** of **Figure 2****.**

In this illustrative example, blockchain system **1504** manages micro-loan transactions for employees **1508** of organizations **1506.** The distributed computing and trust enabled by blockchain system **1504** simplifies the micro-loaning process by reducing risks, and providing transparency in the micro-loaning process with the trust in the transaction being reinforced by the distributed network.

Responding to finalization of transaction terms **238** of **Figure 2****,** loan coordinator **214** records the loan transaction and the transaction terms in blockchain **1510.** Once transaction terms **238** are finalized, loan coordinator **214** submits transactions **1512** that includes signature **1511** of loan coordinator **214** and data **1530** for creating one of smart contracts **1514** based on the finalized ones of transaction terms **238** from **Figure 2****.** In one illustrative example, smart contracts **1514** may require a separate transaction, signed by each contracting user, for example, borrower-user **210** and lender-users **212** of **Figure 2****,** accepting the finalized terms of the smart contract prior before any funds are transferred.

Users interact with micro-loan application **1524** through user input to graphical user interface **1526** using one or more user input devices, such as a keyboard, a mouse, a graphical user interface (a physical display), a touch screen, a voice interaction, and any other suitable interface for interacting with the computer. In one illustrative example, micro-loan application **1524** can be a mobile phone application (mobile app) that is available in a variety of mobile platforms, such as but not limited to, Apple iCS, Android, Windows Phone OS, Blackberry OS, webOS, and Symbian OS.

In one illustrative example, client devices **1528,** which can include one or more of borrower device **209** and lender device **213** of **Figure 2****,** display graphical user interface **1526** on display system **1531.** In this illustrative example, display system **1531** can be a group of display devices. T, display device in display system **1531** may be selected from one of a liquid crystal display (LCD), a light emitting diode (LED) display, an organic light emitting diode (OLED) display, and other suitable types of display devices.

External accounts **1532** are examples of account **804** and account **806** shown in block form in **Figure 8****.** External accounts **1532** allow external actors, such as borrower-user **210,** lender-users **212,** and loan coordinator **214** and to interact with blockchain **216** by issuing transactions **1512,** signed using key **1534.**

Transactions **1512** submitted from loan coordinator **214** and are cryptographically-signed to uniquely identify a particular account. For example, blockchain system **1504** is able to uniquely identify which of borrower-user **210,** lender-users **212,** and loan coordinator **214** issues the transaction based on the unique signature **1536** created using key **1534.** Based on the unique signature **1536** created, each node in blockchain network **1517** can use the corresponding one of key **1534** to identify the corresponding one of external accounts **1532** that issued the transaction.

In this illustrative example, transaction **1512** is a "contract creation" transaction that includes data **1530** specifying initialization code for one of smart contracts **1514.** Additionally, data **1530** can specify input data for one or more of smart contracts **1514,** such as transaction terms **238** entered into one or more templates **211** of **Figure 2****.** Once created, smart contracts **1514** store transaction terms **238** in its associated storage **1538** as part of the smart contract's associated state.

In this manner, blockchain system **1504** records the loan transaction and the transaction terms in blockchain **1510** by generating one of smart contracts **1514** for the loan transaction based on transaction terms **238** of **Figure 2****,** and recording the smart contract in blockchain **1510.** Blockchain system **1504** manages a loan balance within smart contracts **1514** according to transaction terms **238** and based on repayment transactions submitted from borrower-user **210,** lender-users **212,** and recorded on the blockchain.

Blockchain system **1504** records transactions **1512** in blocks **1542** of blockchain **1510.** Each of transactions **1512** is hashed and stored in transactions hash tree **1544** of an associated one of blocks **1542.** All of the transaction hashes in transactions hash tree **1544** are themselves hashed and stored as a root hash as part of block headers **1547.**

Block headers **1547** are smaller than the entire associated block **1548.** Using a distributed hash table as a database, mobile device **1551** can operate as light client node **1552** that stores just block headers **1547** of blockchain **1510.** Light client node **1552** can obtain blockchain information by communicating with trusted full node **1554.** Light client node **1552** allow users in storage-limited or bandwidth-limited environments, such as in applications on mobile device **1551,** to maintain a high-security assurance about a current state of some portion of the state of blockchain **1510,** or verify the execution of transactions **1512.**

In this illustrative example, smart contracts **1514** can generate one or more of messages **1556** in response to the execution of code **1416.** Messages **1556** can be sent to other ones of accounts **1543,** including external accounts **1532** and other smart contracts **1514.** Additionally, messages **1556** generated by smart contracts **1514** can request external accounts **1532** to generate external events, such as push event **1564.** Push event **1564** can be, for example, a web hook, a web socket, or some other appropriate communication that communicates timeclock information to an external service, such as payroll service **1566.**

For example, blockchain system **1504** associates a URL address for payroll service **1566** with the account of organization **1506** in blockchain system **1504.** Blockchain system **1504** pushes a POST request to payroll service **1566.** The POST request can comprise a JSON object that includes payroll information to run payroll services for organization **1506.** Payroll information in the JSON object can be encrypted.

In this illustrative example, payroll service **1566** is associated with an account, such as one of external accounts **1532,** of a payroll service provider. Blockchain system **1504** communicates payroll information to payroll service **1566** through push event **1564.** In this illustrative example, push event **1564** communicates payroll information to payroll service **1566,** enabling payroll service **1566** to use payroll information to provide payroll services for one or more of organizations **1506** and employees **1508.**

In this illustrative example, the set of lender-users are employees of the set of organizations. In running payroll for a set of organizations, payroll service **1566** identifies one of smart contracts **1514** in blockchain **1510** for a loan between borrower-user **210** and lender-users **212.** Payroll service **1566** remits lender funds **217** to the borrower-user by subtracting requested funds from scheduled payroll payments to the set of lender-users and adding the requested loan funds to scheduled payroll payments to the borrower-user. Based on the amount of remitted funds, payroll service **1566** can submit additional transactions to blockchain **1510,** thereby managing a loan balance that is recorded in storage **1538** of the associated ones of smart contracts **1514.**

Additionally, within remitting loan funds to the borrower-user, payroll service **1566** identifies one of smart contracts **1514** in blockchain **1510** for a loan between borrower-user 210 and lender-users **212.** Payroll service **1566** remits borrower funds **219** to lender-users **212** according to the terms recorded in smart contracts **1514,** by subtracting borrower funds **219** from scheduled payroll payments to the set of borrower-user and adding the funds to scheduled payroll payments to the lender-user. Based on the amount of repaid funds, payroll service **1566** can submit additional transactions to blockchain **1510,** thereby managing a loan balance that is recorded in storage **1538** of the associated ones of smart contracts **1514.**

In an alternative embodiment, funds manager **218** ,from **Figure 2****,** has access to an account of both borrower-user **210** and lender-users **212.** The accounts can be internal to blockchain **1510,** or external to blockchain **1510,** such as a bank account, a credit account, or some other source of funds. Funds manager **218** remits loan funds to the borrower-user by subtracting requested loan funds from the account of lender-users and adding the requested loan funds to the account of borrower-user. Based on the amount of remitted funds, funds manager **218** can submit additional transactions to the blockchain, thereby managing a loan balance that is recorded in storage **1538** of the associated ones of smart contracts **1514.**

Additionally, within remitting loan funds to the borrower-user, funds manager **218** identifies one of smart contracts **1514** in the blockchain for a loan between borrower-user **210** and lender-users **212.** Funds manager **218** remits repayment to lender-users **212** according to the terms recorded in smart contracts **1514,** by subtracting repayment loan funds from the account of the set of borrower-user and adding the repayment loan funds to the account of the lender-user. Based on the amount of repaid funds, funds manager **218** can submit additional transactions to the blockchain, thereby managing a loan balance that is recorded in storage **1538** of the associated ones of smart contracts **1514.**

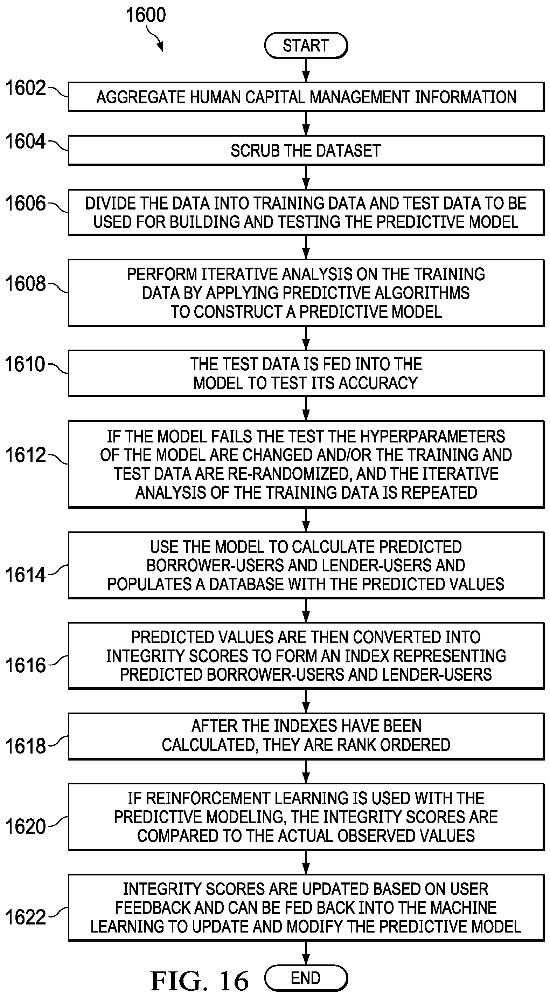

Turning to **Figure 16****,** an illustration of a flowchart of a process for predictive modeling and indexing is depicted in accordance with an illustrative embodiment. Process **1600** can be implemented in software, hardware, or a combination of the two. When software is used, the software comprises program code that can be loaded from a storage device and run by a processor unit in a computer system such as computer system **208** in **Figure 2****.** Computer system **208** may reside in a network data processing system such as network data processing system **112** in **Figure 1****.** For example, computer system **208** may reside on one or more of server computer **116,** server computer **118,** client computer **122,** client computer **124,** and client computer **126** connected by network **114** in **Figure 1****.** Moreover, the process can be implemented by computer system **302** in **Figure 3** and a processing unit such as processing unit **318** in **Figure 3****.**

Process **1600** begins with aggregate human capital management information, such as human capital management information **224** of **Figure 2** (step **1602**). After the dataset is aggregated, process **1600** will scrub the dataset (step **1604**). Very large datasets, sometimes referred to as Big Data, often contain noise and complicated data structures. Bordering on the order of petabytes, such datasets comprise a variety, volume, and velocity (rate of change) that defies conventional processing, and is impossible for a human to process without advanced machine assistance. Scrubbing refers to the process of refining the dataset before using it to build a predictive model and includes modifying and/or removing incomplete data or data with little predictive value. It can also entail converting text based data into numerical values (one-hot encoding) or convert numerical values into a category.

After the dataset has been scrubbed, process **1600** will divide the data into training data and test data to be used for building and testing the predictive model (step **1606**). To produce optimal results, the same data that is used to test the model should not be the same data used for training. The data is divided by rows, usually with 70-80% used for training and 20-30% used for testing.

Process **1600** will then perform iterative analysis on the training data by applying predictive algorithms to construct a predictive model (step **1608**). The algorithm, through trial and error, deciphers the patterns that exist between the input training data and the known output values to create a model that can reproduce the same underlying rules with new data.

There are three main categories of machine learning: supervised, unsupervised, and reinforcement learning. Supervised machine learning comprises providing the machine with test data and the correct output value of the data. Examples of supervised learning algorithms include regression analysis, decisions trees, *k*-nearest neighbors, neural networks, and support vector machines. Referring back to table **400** in **Figure 4****,** during supervised learning the values for the y column (output) are provided along with the training data (labeled dataset) for the model building process in step **1608.**

After the model is constructed, the test data is fed into the model to test its accuracy (step **1610**). In an embodiment the model is tested using mean absolute error, which examines each prediction in the model and provides an average error score for each prediction. If the error rate between the training and test dataset is below a predetermined threshold, the model has learned the dataset's pattern and passed the test.

If the model fails the test: the hyperparameters of the model are changed and/or the training and test data are re-randomized or more data is collected (either through obtaining more samples or through data augmentation), and the iterative analysis of the training data is repeated (step **1612**). Hyperparameters are the settings of the algorithm that control how fast the model learns patterns and which patterns to identify and analyze. Once a model has passed the test stage it is ready for application.

Whereas supervised and unsupervised learning reach an endpoint after a predictive model is constructed and passes the test in step **1610,** reinforcement learning continuously improves its model using feedback from application to new empirical data. Algorithms such as Q-learning are used to train the predictive model through continuous learning using measurable performance criteria (discussed in more detail below).

After the model is constructed and tested for accuracy, process **1600** will use the model to calculate predicted borrower-users and lender-users and populates a database with the predicted values (step **1614**).

The predicted values are then converted into integrity scores to form an index representing predicted borrower-users and lender-users (step **1616**).

After the indexes have been calculated, they are rank ordered (step **1618**). Rank ordering facilitates comparison across different users and integrity scores.

If reinforcement learning is used with the predictive modelling, the integrity scores are compared to the actual observed values (step **1620**).

Integrity scores are updated based on user feedback and can be fed back into the machine learning to update and modify the predictive model (step **1622**). The process terminates thereafter.

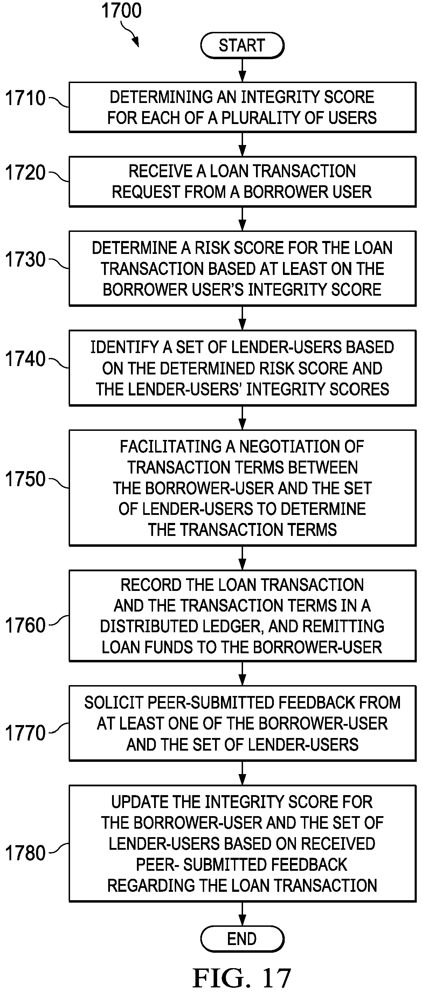

With reference next to **Figure 17****,** a flowchart of a process for facilitating peer-to-peer micro-loan transactions is depicted in accordance with an illustrative embodiment. The process of **Figure 13** can be a software process implemented in one or more components of micro-loan system **206** of **Figure 2****.**

The process begins by determining an integrity score for each user of a plurality of users (step **1710**). The integrity score for each user is based on human capital management information for the user and peer-submitted feedback about the user.

The process will then receive a loan transaction request from a borrower-user (step **1720**). Afterwards, the process will determine a risk score for the loan transaction based at least on the borrower-user's integrity score (step **1730**). The process will then identify a set of lender-users based on the determined risk score and the lender-users' integrity scores (step **1740**).

Afterwards, the process will then allow for facilitating a negotiation of transaction terms between the borrower-user and the set of lender-users to determine the transaction terms (step **1750**) .

Responding to finalization of the transaction terms, the process will then record the loan transaction and the transaction terms in a distributed ledger, and remitting loan funds to the borrower-user (step **1760**).

Responsive to a subsequent repayment of the loan transaction according to the transaction terms, the process then will solicit peer-submitted feedback from at least one of the borrower-user and the set of lender-users (step **1770**).

The process will then update the integrity score for the borrower-user and the set of lender-users based on received peer-submitted feedback regarding the loan transaction (step **1780**), with the process terminating thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

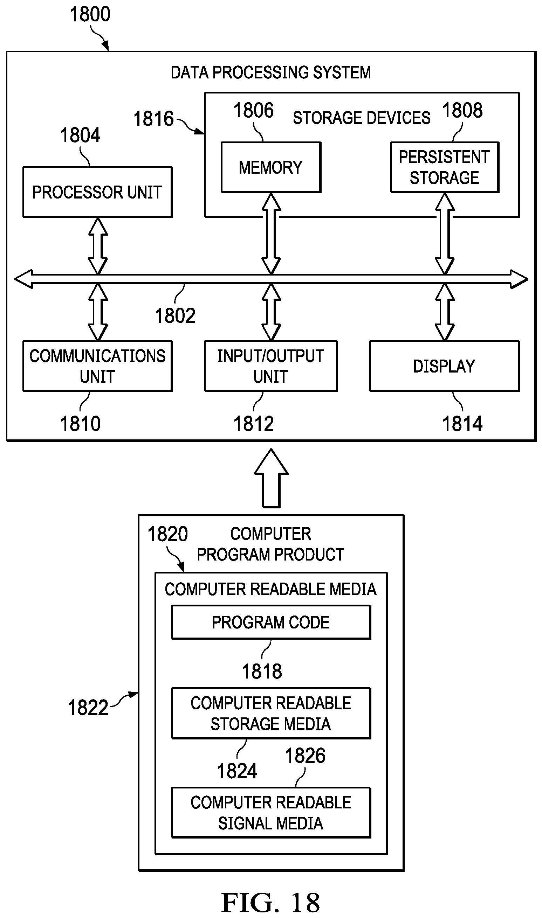

Turning now to **Figure 18****,** an illustration of a block diagram of a data processing system is depicted in accordance with an illustrative embodiment. Data processing system **1800** may be used to implement computer system **208** and other data processing systems that may be used in micro-loan environment **204** in **Figure 2****.**

In this illustrative example, data processing system **1800** includes communications framework **1802,** which provides communications between processor unit **1804,** memory **1806,** persistent storage **1808,** communications unit **1810,** input/output (I/O) unit **1828,** and display **1814.** In this example, communications framework **1802** may take the form of a bus system.

Processor unit **1804** serves to execute instructions for software that may be loaded into memory **1806.** Processor unit **1804** may be a number of processors, a multi-processor core, or some other type of processor, depending on the particular implementation.

Memory **1806** and persistent storage **1808** are examples of storage devices **1816.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **1816** may also be referred to as computer readable storage devices in these illustrative examples. Memory **1806,** in these examples, may be, for example, a random access memory or any other suitable volatile or non-volatile storage device. Persistent storage **1808** may take various forms, depending on the particular implementation.

For example, persistent storage **1808** may contain one or more components or devices. For example, persistent storage **1808** may be a hard drive, a solid state hard drive, a flash memory, a rewritable optical disk, a rewritable magnetic tape, or some combination of the above. The media used by persistent storage **1808** also may be removable. For example, a removable hard drive may be used for persistent storage **1808.**

Communications unit **1810,** in these illustrative examples, provides for communications with other data processing systems or devices. In these illustrative examples, communications unit **1810** is a network interface card.

Input/output unit **1812** allows for input and output of data with other devices that may be connected to data processing system **1800.** For example, input/output unit **1812** may provide a connection for user input through at least one of a keyboard, a mouse, or some other suitable input device. Further, input/output unit **1812** may send output to a printer. Display **1814** provides a mechanism to display information to a user.

Instructions for at least one of the operating system, applications, or programs may be located in storage devices **1816,** which are in communication with processor unit **1804** through communications framework **1802.** The processes of the different embodiments may be performed by processor unit **1804** using computer-implemented instructions, which may be located in a memory, such as memory **1806.**

These instructions are referred to as program code, computer usable program code, or computer readable program code that may be read and executed by a processor in processor unit **1804.** The program code in the different embodiments may be embodied on different physical or computer readable storage media, such as memory **1806** or persistent storage **1808.**

Program code **1818** is located in a functional form on computer readable media **1820** that is selectively removable and may be loaded onto or transferred to data processing system **1800** for execution by processor unit **1804.** Program code **1818** and computer readable media **1820** form computer program product **1822** in these illustrative examples. In one example, computer readable media **1820** may be computer readable storage media **1824** or computer readable signal media **1826.**

In these illustrative examples, computer readable storage media **1824** is a physical or tangible storage device used to store program code **1818** rather than a medium that propagates or transmits program code **1818.**

Alternatively, program code **1818** may be transferred to data processing system **1800** using computer readable signal media **1826.** Computer readable signal media **1826** may be, for example, a propagated data signal containing program code **1818.** For example, computer readable signal media **1826** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **1800** are not meant to provide architectural limitations to the manner in which different embodiments may be implemented. The different illustrative embodiments may be implemented in a data processing system including components in addition to or in place of those illustrated for data processing system **1800.** Other components shown in **Figure 18** can be varied from the illustrative examples shown. The different embodiments may be implemented using any hardware device or system capable of running program code **1818.**

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for facilitating micro-loan transactions, comprising:
aggregating, by a micro-loan system comprising a hardware processor, data regarding a plurality of factors associated with human capital management information and a plurality of users;
scrubbing, by the micro-loan system, the aggregated data to generate a refined dataset;
dividing, by the micro-loan system, the refined dataset into a training dataset and a testing dataset;
constructing, by the micro-loan system via execution of machine learning on the training dataset, a model configured to predict categories for the plurality of users, the categories indicating at least one of borrower or lender;
determining, by the micro-loan system, a plurality of integrity scores (222) for the plurality of users based on human capital information for the plurality of users and peer-submitted feedback about the plurality of users;
receiving (1720), by the micro-loan system, a request for a loan transaction request (228) from a first user (210) of the plurality of users, the first user predicted by the model to be a borrower;
determining (1730), by the micro-loan system, a risk score (230) for the loan transaction based at least on a first integrity score of the plurality of integrity scores (222) for the first user;
identifying (1740), by the micro-loan system, a plurality of lenders (212) from the plurality of users based on the determined risk score (230) and integrity scores of the plurality of integrity scores (222) corresponding to the plurality of lenders;
facilitating (1750), by the micro-loan system, a negotiation of transaction terms (238) between the borrower (210) and the set of lenders (212) to determine the transaction terms (238);
recording (1760), by the micro-loan system responsive to finalization of the transaction terms, the loan transaction and the transaction terms (238) in a first smart contract in a first blockchain;
synchronizing the first blockchain across a plurality of nodes;
soliciting (1770), by the micro-loan system responsive to subsequent repayment of the loan transaction according to the transaction terms (238), peer-submitted feedback (226); and
updating (1780), by the micro-loan system based on user feedback, at least one integrity score of the plurality of integrity scores and feeding said updated integrity score back to a machine learning process to modify the model.

2. The method of claim 1, further comprising:
aggregating the human capital management information by aggregating (334) sample data regarding a plurality of factors associated with the human capital management information (224) and a plurality of users.

3. The method of claim 1 or claim 2, further comprising:
performing, by the micro-loan system, iterative analysis on the training dataset to construct the model, wherein the machine learning model comprises at least one of a regression analysis, a decision tree, k-nearest neighbors, neural networks, or a support vector machine.

4. The method of claim 3, further comprising:
generating, by the micro-loan system, the plurality of integrity scores for the plurality of users over a specified time period to create indices of integrity scores; and
rank ordering (342), by the micro-loan system, the plurality of users within the selected set of human capital management information (224) according to the integrity scores (222).

5. The method of claim 1, further comprising:
determining, by the micro-loan system, an error rate of an initial model generated via machine learning using the training dataset;
comparing, by the micro-loan system, the error rate of the initial model with a threshold;
changing, by the micro-loan system responsive to the error rate greater than or equal to the threshold, a hyperparameter used to generate the initial model;
retraining, by the micro-loan system, the initial model with the changed hyperparameter to construct the model;
determining, by the micro-loan system, a second error rate of the model is less than the threshold; and
deploying, by the micro-loan system, the model re-trained with the changed hyperparameter to predict the categories for the plurality of users.

6. The method of claim 1, further comprising:
running, by the micro-loan system, payroll for a set of organizations (1506), wherein the plurality of lenders are employees of the set of organizations; and
subtracting, by the micro-loan system, requested loan funds from scheduled payroll payments to the plurality of lenders to execute a remittance of the requested loan funds.

7. The method of claim 1, further comprising:
adding, by the micro-loan system, repayment funds to scheduled payroll payments to the plurality of lenders; and
depositing, by the micro-loan system, the repayment funds into a set of registered accounts of the plurality of lenders to execute a remittance of repayment funds to the plurality of lenders in accordance with the transaction terms.

8. The method of claim 1, further comprising:
running, by the micro-loan system, payroll for a set of organizations (1506), wherein the borrower is an employee (1506) of the set of organizations (1506); and
subtracting by the micro-loan system, repayment funds from scheduled payroll payments to the borrower to execute a remittance of repayment funds to the plurality of lenders in accordance with the transaction terms.

9. The method of claim 1, further comprising:
adding, by the micro-loan system, repayment funds to scheduled payroll payments to the plurality of lenders; and
depositing, by the micro-loan system, the repayment funds into a set of registered accounts of the plurality of lenders to execute a remittance of repayment funds to the plurality of lenders in accordance with the transaction terms.

10. The method of claim 1, further comprising:
remitting, via the micro-loan system, loan funds to the borrower in accordance with the transaction terms.

11. A computer system for facilitating micro-loan transactions, the computer system comprising:
a hardware processor; and
a micro-loan system in communication with the hardware processor, wherein the micro-loan system is configured to:
aggregate data regarding a plurality of factors associated with human capital management information and a plurality of users;
scrub the aggregated data to generate a refined dataset;
divide the refined dataset into a training dataset and a testing dataset;
construct, via execution of machine learning on the training dataset, a model configured to predict categories for the plurality of users, the categories indicating at least one of borrower or lender;
determine a plurality of integrity scores (222) for the plurality of users based on the human capital information for the plurality of users and peer-submitted feedback about the plurality of users;
receive (1720) a request for a loan transaction request (228) from a first user (210) of the plurality of users, the first user predicted by the model to be a borrower;
determine (1730) a risk score (230) for the loan transaction based at least on a first integrity score of the plurality of integrity scores (222) for the first user;
identify (1740) a plurality of lenders (212) from the plurality of users based on the determined risk score (230) and integrity scores of the plurality of integrity scores (222) corresponding to the plurality of lenders;
facilitate (1750) a negotiation of transaction terms (238) between the borrower (210) and the set of lenders (212) to determine the transaction terms (238);
record (1760), responsive to finalization of the transaction terms, the loan transaction and the transaction terms (238) in a first smart contract in a first blockchain;
synchronize the first blockchain across a plurality of nodes,
solicit (1770), responsive to subsequent repayment of the loan transaction according to the transaction terms (238), peer-submitted feedback (226); and
update (1780), based on user feedback, at least one integrity score of the plurality of integrity scores and feed said updated integrity score back to a machine learning process to modify the model.

12. A non-transitory computer readable storage media (1820) including program code (1818), stored on the computer readable storage media (1820), and executable by a processor to:
aggregate, by a processor, data regarding a plurality of factors associated with human capital management information and a plurality of users;
scrub, by the processor, the aggregated data to generate a refined dataset;
divide, by the processor, the refined dataset into a training dataset and a testing dataset;
construct, by the processor via execution of machine learning on the training dataset, a model configured to predict categories for the plurality of users, the categories indicating at least one of borrower or lender;
determine, by the processor, a plurality of integrity scores (222) for the plurality of users based on the human capital information for the plurality of users and peer-submitted feedback about the plurality of users;
receive (1720), by the processor, a request for a loan transaction request (228) from a first user (210) of the plurality of users, the first user predicted by the model to be a borrower;
determine (1730), by the processor, a risk score (230) for the loan transaction based at least on a first integrity score of the plurality of integrity scores (222) for the first user;
identify (1740), by the processor, a plurality of lenders (212) from the plurality of users based on the determined risk score (230) and integrity scores of the plurality of integrity scores (222) corresponding to the plurality of lenders;
facilitate (1750), by the processor, a negotiation of transaction terms (238) between the borrower (210) and the set of lenders (212) to determine the transaction terms (238);
record (1760), by the processor responsive to finalization of the transaction terms, the loan transaction and the transaction terms (238) in a first smart contract in a first blockchain;
synchronize the first blockchain across a plurality of nodes;
solicit (1770), by the processor responsive to a subsequent repayment of the loan transaction according to the transaction terms (238), peer-submitted feedback(226); and
update (1780), based on user feedback, at least one integrity score of the plurality of integrity scores and feed said updated integrity score back to a machine learning process to modify the model.

## Patentansprüche

1. Verfahren zum Ermöglichen von Mikrokredittransaktionen, das Folgendes umfasst:
Aggregieren, durch ein Mikrokreditsystem, das einen Hardwareprozessor umfasst, von Daten bezüglich einer Vielzahl von Faktoren, die mit Humankapitalverwaltungsinformationen assoziiert sind, und einer Vielzahl von Benutzern;
Scannen, durch das Mikrokreditsystem, der aggregierten Daten, um einen verfeinerten Datensatz zu erzeugen;
Teilen, durch das Mikrokreditsystem, des verfeinerten Datensatzes in einen Trainingsdatensatz und einen Testdatensatz;
Konstruieren, durch das Mikrokreditsystem über die Ausführung von maschinellem Lernen auf dem Trainingsdatensatz, eines Modells, das dazu ausgelegt ist, Kategorien für die Vielzahl von Benutzern vorherzusagen, wobei die Kategorien Kreditnehmer und/oder Kreditgeber angeben;
Bestimmen, durch das Mikrokreditsystem, einer Vielzahl von Integritätsbewertungen (222) für die Vielzahl von Benutzern basierend auf Humankapitalinformationen für die Vielzahl von Benutzern und Peer-submitted Feedback über die Vielzahl von Benutzern;
Empfangen (1720), durch das Mikrokreditsystem, einer Anfrage für eine Kredittransaktion (228) von einem ersten Benutzer (210) der Vielzahl von Benutzern, wobei der erste Benutzer durch das Modell als Kreditnehmer vorhergesagt wird;
Bestimmen (1730), durch das Mikrokreditsystem, einer Risikobewertung (230) für die Kredittransaktion basierend zumindest auf einer ersten Integritätsbewertung der Vielzahl von Integritätsbewertungen (222) für den ersten Benutzer;
Identifizieren (1740), durch das Mikrokreditsystem, einer Vielzahl von Kreditgebern (212) aus der Vielzahl von Benutzern basierend auf der bestimmten Risikobewertung (230) und Integritätsbewertungen der Vielzahl von Integritätsbewertungen (222), die der Vielzahl von Kreditgebern entsprechen;
Ermöglichen (1750), durch das Mikrokreditsystem, einer Verhandlung von Transaktionsbedingungen (238) zwischen dem Kreditnehmer (210) und dem Satz von Kreditgebern (212), um die Transaktionsbedingungen (238) zu bestimmen;
Aufzeichnen (1760), durch das Mikrokreditsystem als Reaktion auf die Fertigstellung der Transaktionsbedingungen, der Kredittransaktion und der Transaktionsbedingungen (238) in einem ersten intelligenten Vertrag in einer ersten Blockchain;
Synchronisieren der ersten Blockchain über eine Vielzahl von Knoten;
Anfordern (1770), durch das Mikrokreditsystem als Reaktion auf eine anschließende Rückzahlung der Kredittransaktion gemäß den Transaktionsbedingungen (238), von Peer-submitted Feedback (226); und
Aktualisieren (1780), durch das Mikrokreditsystem basierend auf Benutzer-Feedback, mindestens einer Integritätsbewertung der Vielzahl von Integritätsbewertungen und Rückführen der aktualisierten Integritätsbewertung zu einem Maschinenlernprozess, um das Modell zu modifizieren.

2. Verfahren nach Anspruch 1, das ferner Folgendes umfasst:
Aggregieren der Humankapitalverwaltungsinformationen durch Aggregieren (334) von Probendaten bezüglich einer Vielzahl von Faktoren, die mit den Humankapitalverwaltungsinformationen (224) und einer Vielzahl von Benutzern assoziiert sind.

3. Verfahren nach Anspruch 1 oder Anspruch 2, das ferner Folgendes umfasst:
Durchführen, durch das Mikrokreditsystem, einer iterativen Analyse an dem Trainingsdatensatz, um das Modell zu konstruieren, wobei das Maschinenlernmodell eine Regressionsanalyse und/oder einen Entscheidungsbaum und/oder k-nächste Nachbarn und/oder neuronale Netzwerke und/oder eine Unterstützungsvektormaschine umfasst.

4. Verfahren nach Anspruch 3, das ferner Folgendes umfasst:
Erzeugen, durch das Mikrokreditsystem, der Vielzahl von Integritätsbewertungen für die Vielzahl von Benutzern über einen spezifizierten Zeitraum, um Indizes von Integritätsbewertungen zu erzeugen; und
Rangeinstufung (342), durch das Mikrokreditsystem, der Vielzahl von Benutzern innerhalb des ausgewählten Satzes von Humankapitalverwaltungsinformationen (224) gemäß den Integritätsbewertungen (222).

5. Verfahren nach Anspruch 1, das ferner Folgendes umfasst:
Bestimmen, durch das Mikrokreditsystem, einer Fehlerrate eines anfänglichen Modells, das über maschinelles Lernen unter Verwendung des Trainingsdatensatzes erzeugt wird;
Vergleichen, durch das Mikrokreditsystem, der Fehlerrate des anfänglichen Modells mit einer Schwelle;
Ändern, durch das Mikrokreditsystem als Reaktion auf die Fehlerrate, die größer als oder gleich der Schwelle ist, eines Hyperparameters, der zum Erzeugen des anfänglichen Modells verwendet wird;
Umtrainieren, durch das Mikrokreditsystem, des anfänglichen Modells mit dem geänderten Hyperparameter, um das Modell zu konstruieren;
Bestimmen, durch das Mikrokreditsystem, einer zweiten Fehlerrate des Modells, die kleiner als die Schwelle ist; und
Einsetzen, durch das Mikrokreditsystem, des Modells, das mit dem geänderten Hyperparameter umtrainiert wurde, um die Kategorien für die Vielzahl von Benutzern vorherzusagen.

6. Verfahren nach Anspruch 1, das ferner Folgendes umfasst:
Durchführen, durch das Mikrokreditsystem, einer Lohnabrechnung für einen Satz von Organisationen (1506), wobei die Vielzahl von Kreditgebern Mitarbeiter des Satzes von Organisationen sind; und
Subtrahieren, durch das Mikrokreditsystem, der angeforderten Kreditmittel von den geplanten Lohnzahlungen an die Vielzahl von Kreditgebern, um eine Überweisung der angeforderten Kreditmittel durchzuführen.

7. Verfahren nach Anspruch 1, das ferner Folgendes umfasst:
Hinzufügen, durch das Mikrokreditsystem, von Rückzahlungsmitteln zu geplanten Lohnzahlungen an die Vielzahl von Kreditgebern; und
Einzahlen, durch das Mikrokreditsystem, der Rückzahlungsmittel in einen Satz registrierter Konten der Vielzahl von Kreditgebern, um eine Überweisung von Rückzahlungsmitteln an die Vielzahl von Kreditgebern gemäß den Transaktionsbedingungen auszuführen.

8. Verfahren nach Anspruch 1, das ferner Folgendes umfasst:
Durchführen, durch das Mikrokreditsystem, einer Lohnabrechnung für einen Satz von Organisationen (1506), wobei der Kreditnehmer ein Mitarbeiter (1506) des Satzes von Organisationen (1506) ist; und
Subtrahieren, durch das Mikrokreditsystem, von Rückzahlungsmitteln von geplanten Lohnzahlungen an den Kreditnehmer, um eine Überweisung von Rückzahlungsmitteln an die Vielzahl von Kreditgebern gemäß den Transaktionsbedingungen auszuführen.

9. Verfahren nach Anspruch 1, das ferner Folgendes umfasst:
Hinzufügen, durch das Mikrokreditsystem, von Rückzahlungsmitteln zu geplanten Lohnzahlungen an die Vielzahl von Kreditgebern; und
Einzahlen, durch das Mikrokreditsystem, der Rückzahlungsmittel in einen Satz registrierter Konten der Vielzahl von Kreditgebern, um eine Überweisung von Rückzahlungsmitteln an die Vielzahl von Kreditgebern gemäß den Transaktionsbedingungen auszuführen.

10. Verfahren nach Anspruch 1, das ferner Folgendes umfasst:
Überweisen, über das Mikrokreditsystem, von Kreditmitteln an den Kreditnehmer gemäß den Transaktionsbedingungen.

11. Computersystem zum Ermöglichen von Mikrokredittransaktionen, wobei das Computersystem Folgendes umfasst:
einen Hardwareprozessor; und
ein Mikrokreditsystem in Kommunikation mit dem Hardwareprozessor, wobei das Mikrokreditsystem zu für Folgendes ausgebildet ist:
Aggregieren von Daten bezüglich einer Vielzahl von Faktoren, die mit Humankapitalverwaltungsinformationen und einer Vielzahl von Benutzern assoziiert sind;
Bereinigen der aggregierten Daten, um einen verfeinerten Datensatz zu erzeugen;
Aufteilen des verfeinerten Datensatzes in einen Trainingsdatensatz und einen Testdatensatz;
Konstruieren, über die Ausführung von maschinellem Lernen auf dem Trainingsdatensatz, eines Modells, das dazu ausgelegt ist, Kategorien für die Vielzahl von Benutzern vorherzusagen, wobei die Kategorien Kreditnehmer und/oder Kreditgeber angeben;
Bestimmen einer Vielzahl von Integritätsbewertungen (222) für die Vielzahl von Benutzern basierend auf den Humankapitalinformationen für die Vielzahl von Benutzern und Peer-submitted Feedback über die Vielzahl von Benutzern;
Empfangen (1720) einer Anfrage für eine Kredittransaktion (228) von einem ersten Benutzer (210) der Vielzahl von Benutzern, wobei der erste Benutzer durch das Modell als Kreditnehmer vorhergesagt wird;
Bestimmen (1730) einer Risikobewertung (230) für die Kredittransaktion basierend mindestens auf einer ersten Integritätsbewertung der Vielzahl von Integritätsbewertungen (222) für den ersten Benutzer;
Identifizieren (1740) einer Vielzahl von Kreditgebern (212) aus der Vielzahl von Benutzern basierend auf der bestimmten Risikobewertung (230) und
Integritätsbewertungen der Vielzahl von Integritätsbewertungen (222), die der Vielzahl von Kreditgebern entsprechen;
Ermöglichen (1750) einer Verhandlung von Transaktionsbedingungen (238) zwischen dem Kreditnehmer (210) und dem Satz von Kreditgebern (212), um die Transaktionsbedingungen zu bestimmen (238);
Aufzeichnen (1760), als Reaktion auf die Fertigstellung der Transaktionsbedingungen, der Kredittransaktion und
der Transaktionsbedingungen (238) in einem ersten intelligenten Vertrag in einer ersten Blockchain;
Synchronisieren der ersten Blockchain über eine Vielzahl von Knoten,
Anfordern (1770), als Reaktion auf die anschließende Rückzahlung der Kredittransaktion gemäß den Transaktionsbedingungen (238), eines Peer-submitted Feedbacks (226); und
Aktualisieren (1780), basierend auf Benutzer-Feedback, mindestens einer Integritätsbewertung der Vielzahl von Integritätsbewertungen und Zurückführen der aktualisierten Integritätsbewertung in einen Maschinenlernprozess, um das Modell zu modifizieren.

12. Nichtflüchtiges computerlesbares Speichermedium (1820), das Programmcode (1818) aufweist, der auf dem computerlesbaren Speichermedium (1820) gespeichert ist und durch einen Prozessor ausführbar ist, um Folgendes zu bewirken:
Aggregieren, durch einen Prozessor, von Daten bezüglich einer Vielzahl von Faktoren, die mit Humankapitalverwaltungsinformationen und einer Vielzahl von Benutzern assoziiert sind;
Bereinigen, durch den Prozessor, der aggregierten Daten, um einen verfeinerten Datensatz zu erzeugen;
Aufteilen, durch den Prozessor, des verfeinerten Datensatzes in einen Trainingsdatensatz und einen Testdatensatz;
Konstruieren, durch den Prozessor über die Ausführung von maschinellem Lernen auf dem Trainingsdatensatz, eines Modells, das dazu ausgelegt ist, Kategorien für die Vielzahl von Benutzern vorherzusagen, wobei die Kategorien Kreditnehmer und/oder Kreditgeber angeben;
Bestimmen, durch den Prozessor, einer Vielzahl von Integritätsbewertungen (222) für die Vielzahl von Benutzern basierend auf den Humankapitalinformationen für die Vielzahl von Benutzern und dem Peer-submitted Feedback über die Vielzahl von Benutzern;
Empfangen (1720), durch den Prozessor, einer Anfrage für eine Kredittransaktion (228) von einem ersten Benutzer (210) der Vielzahl von Benutzern, wobei der erste Benutzer durch das Modell als ein Kreditnehmer vorhergesagt wird;
Bestimmen (1730), durch den Prozessor, einer Risikobewertung (230) für die Kredittransaktion basierend zumindest auf einer ersten Integritätsbewertung der Vielzahl von Integritätsbewertungen (222) für den ersten Benutzer;
Identifizieren (1740), durch den Prozessor, einer Vielzahl von Kreditgebern (212) aus der Vielzahl von Benutzern basierend auf der bestimmten Risikobewertung (230) und Integritätsbewertungen der Vielzahl von Integritätsbewertungen (222), die der Vielzahl von Kreditgebern entsprechen;
Ermöglichen (1750), durch den Prozessor, einer Verhandlung von Transaktionsbedingungen (238) zwischen dem Kreditnehmer (210) und dem Satz von Kreditgebern (212), um die Transaktionsbedingungen (238) zu bestimmen;
Aufzeichnen (1760), durch den Prozessor als Reaktion auf die Fertigstellung der Transaktionsbedingungen, der Kredittransaktion und der Transaktionsbedingungen (238) in einem ersten intelligenten Vertrag in einer ersten Blockchain;
Synchronisieren der ersten Blockchain über eine Vielzahl von Knoten;
Anfordern (1770), durch den Prozessor als Reaktion auf eine anschließende Rückzahlung der Kredittransaktion gemäß den Transaktionsbedingungen (238), des Peer-submitted Feedbacks (226); und
Aktualisieren (1780), basierend auf Benutzer-Feedback, mindestens einer Integritätsbewertung der Vielzahl von Integritätsbewertungen und Zurückführen der aktualisierten Integritätsbewertung in einen Maschinenlernprozess, um das Modell zu modifizieren.

## Revendications

1. Procédé pour faciliter des transactions de microprêt, comprenant :
l'agrégation, par un système de microprêt comprenant un processeur matériel, de données concernant une pluralité de facteurs associés à des informations de gestion de capital humain et une pluralité d'utilisateurs ;
le nettoyage, par le système de microprêt, des données agrégées pour générer un ensemble affiné de données ;
la division, par le système de microprêt, de l'ensemble affiné de données en un ensemble de données d'entraînement et un ensemble de données d'essai ;
la construction, par le système de microprêt, par l'intermédiaire d'exécution d'apprentissage machine sur l'ensemble de données d'entraînement, d'un modèle configuré pour prédire des catégories pour la pluralité d'utilisateurs, les catégories indiquant au moins un parmi un emprunteur ou un prêteur ;
la détermination, par le système de microprêt, d'une pluralité de notes d'évaluation d'intégrité (222) pour la pluralité d'utilisateurs sur la base d'informations de capital humain pour la pluralité d'utilisateurs et d'un retour, soumis par pair, concernant la pluralité d'utilisateurs ;
la réception (1720), par le système de microprêt, d'une demande, d'une demande de transaction de prêt (228), en provenance d'un premier utilisateur (210) de la pluralité d'utilisateurs, le premier utilisateur étant prédit, par le modèle, être un emprunteur ;
la détermination (1730), par le système de microprêt, d'une note d'évaluation de risque (230) pour la transaction de prêt, sur la base au moins d'une première note d'évaluation d'intégrité de la pluralité de notes d'évaluation d'intégrité (222) pour le premier utilisateur ;
l'identification (1740), par le système de microprêt, d'une pluralité de prêteurs (212) parmi la pluralité d'utilisateurs, sur la base de la note d'évaluation de risque (230) déterminée et de notes d'évaluation d'intégrité de la pluralité de notes d'évaluation d'intégrité (222) correspondant à la pluralité de prêteurs ;
la facilitation (1750), par le système de microprêt, d'une négociation de termes de transaction (238) entre l'emprunteur (210) et l'ensemble de prêteurs (212) pour déterminer les termes de transaction (238) ;
l'enregistrement (1760), par le système de microprêt, en réponse à une finalisation des termes de transaction, de la transaction de prêt et des termes de transaction (238) dans une premier contrat intelligent dans une première chaîne de blocs ;
la synchronisation de la première chaîne de blocs à travers une pluralité de nœuds ;
la sollicitation (1770), par le système de microprêt, en réponse à un remboursement subséquent de la transaction de prêt selon les termes de transaction (238), d'un retour soumis par pair (226) ; et
la mise à jour (1780), par le système de microprêt, sur la base d'un retour utilisateur, d'au moins une note d'évaluation d'intégrité de la pluralité de notes d'évaluation d'intégrité, et le retour de ladite note d'évaluation d'intégrité mise à jour à un processus d'apprentissage machine pour modifier le modèle.

2. Procédé de la revendication 1, comprenant en outre : l'agrégation des informations de gestion de capital humain par l'agrégation (334) de données échantillons concernant une pluralité de facteurs associés aux informations de gestion de capital humain (224) et une pluralité d'utilisateurs.

3. Procédé de la revendication 1 ou la revendication 2, comprenant en outre :
la réalisation, par le système de microprêt, d'analyse itérative sur l'ensemble de données d'entraînement pour construire le modèle, dans lequel le modèle d'apprentissage machine comprend au moins un élément parmi une analyse de régression, un arbre de décision, k-voisins les plus proches, des réseaux neuronaux, ou une machine à vecteurs de support.

4. Procédé de la revendication 3, comprenant en outre :
la génération, par le système de microprêt, de la pluralité de notes d'évaluation d'intégrité pour la pluralité d'utilisateurs durant une période spécifiée pour créer des indices de notes d'évaluation d'intégrité ; et
le classement par ordre de rang (342), par le système de microprêt, de la pluralité d'utilisateurs au sein de l'ensemble sélectionné d'informations de gestion de capital humain (224) selon les notes d'évaluation d'intégrité (222).

5. Procédé de la revendication 1, comprenant en outre :
la détermination, par le système de microprêt, d'un taux d'erreurs d'un modèle initial généré par l'intermédiaire d'apprentissage machine en utilisant l'ensemble de données d'entraînement ;
la comparaison, par le système de microprêt, du taux d'erreurs du modèle initial à un seuil ;
le changement, par le système de microprêt, en réponse au taux d'erreurs supérieur ou égal au seuil, d'un hyperparamètre utilisé pour générer le modèle initial ;
le ré-entraînement, par le système de microprêt, du modèle initial avec l'hyperparamètre changé pour construire le modèle ;
la détermination, par le système de microprêt, qu'un second taux d'erreurs du modèle est inférieur au seuil ; et
le déploiement, par le système de microprêt, du modèle ré-entraîné avec le hyperparamètre changé pour prédire les catégories pour la pluralité d'utilisateurs.

6. Procédé de la revendication 1, comprenant en outre :
la réalisation, par le système de microprêt, d'une feuille de paye pour un ensemble d'organisations (1506), dans lequel la pluralité de prêteurs sont des employés de l'ensemble d'organisations ; et
la soustraction, par le système de microprêt, de fonds de prêt demandés, de paiements planifiés de feuille de paye à la pluralité de prêteurs, pour exécuter un versement des fonds de prêt demandés.

7. Procédé de la revendication 1, comprenant en outre :
l'addition, par le système de microprêt, de fonds de remboursement à des paiements planifiés de feuille de paye à la pluralité de prêteurs ; et
le dépôt, par le système de microprêt, des fonds de remboursement dans un ensemble de comptes enregistrés de la pluralité de prêteurs pour exécuter un versement de fonds de remboursement à la pluralité de prêteurs conformément aux termes de transaction.

8. Procédé de la revendication 1, comprenant en outre :
la réalisation, par le système de microprêt, d'une feuille de paye pour un ensemble d'organisations (1506), dans lequel l'emprunteur est un employé (1506) de l'ensemble d'organisations (1506) ; et
la soustraction par le système de microprêt, de fonds de remboursement de paiements planifiés de feuille de paye à l'emprunteur, pour exécuter un versement de fonds de remboursement à la pluralité de prêteurs conformément aux termes de transaction.

9. Procédé de la revendication 1, comprenant en outre :
l'addition, par le système de microprêt, de fonds de remboursement à des paiements planifiés de feuille de paye à la pluralité de prêteurs ; et
le dépôt, par le système de microprêt, des fonds de remboursement dans un ensemble de comptes enregistrés de la pluralité de prêteurs pour exécuter un versement de fonds de remboursement à la pluralité de prêteurs conformément aux termes de transaction.

10. Procédé de la revendication 1, comprenant en outre : le versement, par l'intermédiaire du système de microprêt, de fonds de prêt à l'emprunteur conformément aux termes de transaction.

11. Système d'ordinateur pour faciliter des transactions de microprêt, le système d'ordinateur comprenant :
un processeur matériel ; et
un système de microprêt en communication avec le processeur matériel, dans lequel le système de microprêt est configuré pour :
agréger des données concernant une pluralité de facteurs associés à des informations de gestion de capital humain et une pluralité d'utilisateurs ;
laver les données agrégées pour générer un ensemble affiné de données ;
diviser l'ensemble affiné de données en un ensemble de données d'entraînement et un ensemble de données d'essai ;
construire, par l'intermédiaire d'exécution d'apprentissage machine sur l'ensemble de données d'entraînement, un modèle configuré pour prédire des catégories pour la pluralité d'utilisateurs, les catégories indiquant au moins un parmi un emprunteur ou un prêteur ;
déterminer une pluralité de notes d'évaluation d'intégrité (222) pour la pluralité d'utilisateurs sur la base des informations de capital humain pour la pluralité d'utilisateurs et d'un retour, soumis par pair, concernant la pluralité d'utilisateurs ;
recevoir (1720) une demande, d'une demande de transaction de prêt (228), en provenance d'un premier utilisateur (210) de la pluralité d'utilisateurs, le premier utilisateur étant prédit, par le modèle, être un emprunteur ;
déterminer (1730) une note d'évaluation de risque (230) pour la transaction de prêt, sur la base au moins d'une première note d'évaluation d'intégrité de la pluralité de notes d'évaluation d'intégrité (222) pour le premier utilisateur ;
identifier (1740) une pluralité de prêteurs (212) parmi la pluralité d'utilisateurs, sur la base de la note d'évaluation de risque (230) déterminée et de notes d'évaluation d'intégrité de la pluralité de notes d'évaluation d'intégrité (222) correspondant à la pluralité de prêteurs ;
faciliter (1750) une négociation de termes de transaction (238) entre l'emprunteur (210) et l'ensemble de prêteurs (212) pour déterminer les termes de transaction (238) ;
enregistrer (1760), en réponse à une finalisation des termes de transaction, la transaction de prêt et les termes de transaction (238) dans un premier contrat intelligent dans une première chaîne de blocs ;
synchroniser la première chaîne de blocs à travers une pluralité de nœuds,
solliciter (1770), en réponse à un remboursement subséquent de la transaction de prêt selon les termes de transaction (238), un retour soumis par pair (226) ; et
mettre à jour (1780), sur la base d'un retour utilisateur, au moins une note d'évaluation d'intégrité de la pluralité de notes d'évaluation d'intégrité et retourner ladite note d'évaluation d'intégrité mise à jour à un processus d'apprentissage machine pour modifier le modèle.

12. Support de stockage non transitoire lisible par ordinateur (1820) incluant un code de programme (1818), stocké sur le support de stockage lisible par ordinateur (1820), et exécutable par un processeur pour :
agréger, par un processeur, des données concernant une pluralité de facteurs associés à des informations de gestion de capital humain et une pluralité d'utilisateurs ;
laver, par le processeur, les données agrégées pour générer un ensemble affiné de données ;
diviser, par le processeur, l'ensemble affiné de données en un ensemble de données d'entraînement et un ensemble de données d'essai ;
construire, par le processeur par l'intermédiaire d'exécution d'apprentissage machine sur l'ensemble de données d'entraînement, un modèle configuré pour prédire des catégories pour la pluralité d'utilisateurs, les catégories indiquant au moins un parmi un emprunteur ou un prêteur ;
déterminer, par le processeur, une pluralité de notes d'évaluation d'intégrité (222) pour la pluralité d'utilisateurs sur la base des informations de capital humain pour la pluralité d'utilisateurs et de retour, soumis par pair, concernant la pluralité d'utilisateurs ; recevoir (1720), par le processeur, une demande, d'une demande de transaction de prêt (228), en provenance d'un premier utilisateur (210) de la pluralité d'utilisateurs, le premier utilisateur étant prédit, par le modèle, être un emprunteur ;
déterminer (1730), par le processeur, une note d'évaluation de risque (230) pour la transaction de prêt, sur la base au moins d'une première note d'évaluation d'intégrité de la pluralité de notes d'évaluation d'intégrité (222) pour le premier utilisateur ;
identifier (1740), par le processeur, une pluralité de prêteurs (212) parmi la pluralité d'utilisateurs, sur la base de la note d'évaluation de risque (230) déterminée et de notes d'évaluation d'intégrité de la pluralité de notes d'évaluation d'intégrité (222) correspondant à la pluralité de prêteurs ;
faciliter (1750), par le processeur, une négociation de termes de transaction (238) entre l'emprunteur (210) et l'ensemble de prêteurs (212) pour déterminer les termes de transaction (238) ;
enregistrer (1760), par le processeur, en réponse à une finalisation des termes de transaction, la transaction de prêt et les termes de transaction (238) dans un premier contrat intelligent dans une première chaîne de blocs ;
synchroniser la première chaîne de blocs à travers une pluralité de nœuds ;
solliciter (1770), par le processeur, en réponse à un remboursement subséquent de la transaction de prêt selon les termes de transaction (238), un retour soumis par pair (226) ; et
mettre à jour (1780), sur la base d'un retour utilisateur, au moins une note d'évaluation d'intégrité de la pluralité de notes d'évaluation d'intégrité et retourner ladite note d'évaluation d'intégrité mise à jour à un processus d'apprentissage machine pour modifier le modèle.
